# EUROPÄISCHE PATENTSCHRIFT

(11) **EP 1 958 762 B1**
(45) Veröffentlichungstag und Bekanntmachung des Hinweises auf die Patenterteilung: **24.11.2010**
(21) Anmeldenummer: 08001935.9
(22) Anmeldetag: 01.02.2008
(51) Int. Cl.: B32B 5/26, D04H 1/42, B27N 3/00

(54) **Biologisch abbaubarer Naturfaserverbundwerkstoff**
Biodegradable natural fibre composite material
Matière première composite en fibres naturelles biodégradable

(30) Priorität: 01.02.2007 DE 102007005850; 26.03.2007 DE 102007024045
(43) Veröffentlichungstag der Anmeldung: 20.08.2008
(73) Patentinhaber: WK Naturfaser Technologie GmbH & Co. KG, 4300 St. Valentin (AT)
(72) Erfinder: Wimmer, Robert, Dr., 1150 Wien (AT)
(74) Vertreter: Meyer, Enno

(56) Entgegenhaltungen:
- EP-A- 1 400 328
- EP-A- 1 726 418
- JP-A- 2003 201 659
- JP-A- 2004 255 833

## Beschreibung

Die Erfindung betrifft biologisch abbaubare Naturfaserverbundwerkstoffe, insbesondere einen biologisch abbaubaren Hybridvliesstoff, ein Faserverbundformteil und ein Wandelement, die aus dem biologisch abbaubaren Hybridvliesstoffs gefertigt sind.

Faserverbundwerkstoffe, wie sie heute als Platten- oder Formteil erhältlich sind, bestehen zu einem nicht unerheblichen Anteil aus synthetischen Rohstoffen, wobei üblicherweise eine synthetische, thermoplastische Stützfaser als Bindemittel in der Fasermatrix verwendet wird. Dadurch wird aber die biologische Abbaubarkeit des bekannten Faserverbundwerkstoffes verhindert. Nur durch den Einsatz von Bindemitteln und Klebstoffen aus nachwachsenden Rohstoffen können die Vorteile eines Vlieswerkstoffs aus Naturfasern und der daraus gefertigten Produkte erhalten werden, insbesondere deren biologische Abbaubarkeit. Die Entwicklung von natürlichen Bindemittel-Faser-Compounds ist daher ein wichtiger Bestandteil einer konsequent nachhaltigen Produktion.

Die Herstellung von Vliesen und Faserplatten auf der Basis nachwachsender Rohstoffe ist grundsätzlich bekannt. So werden beispielsweise Formteile aus Hanffasern für die Autoindustrie oder Dämmvliese für den Hausbau produziert. In der überwiegenden Mehrzahl aller dieser Entwicklungen kommen jedoch synthetische Materialien in derartigen Formteilen neben den Naturfasern zum Einsatz.

Als Stand der Technik kann die Verwendung eines synthetischen Bindemittels im Verbund mit natürlichen Fasern angesehen werden, insbesondere der Einsatz von thermoplastischen Spritzfasern aus Polyester. Die so hergestellten Produkte bestehen folglich nicht vollständig aus nachwachsenden oder unbedenklichen Rohstoffen und können daher nicht in biologische Kreisläufe rückgeführt werden. Auch ein technisches Recycling ist kaum sinnvoll möglich. Beispiele für bereits am Markt verbreitete Produkte mit synthetischen Komponenten sind fibre-boards, die von verschiedenen Unternehmen angeboten werden.

Des weiteren sind überwiegend aus Hanf hergestellte und als Dämmstoffe verwendete Faservliese bekannt, die jedoch keine Eigenstabilität besitzen und weder Zug- noch Druckkräfte aufnehmen bzw. übertragen können.

Im Bereich der Plattenproduktion aus Holzwerkstoffen sind Entwicklungen mit stärkegebundenen Sägespäne zu beobachten. Diese genügen zwar den Ansprüchen, vollständig aus nachwachsenden Rohstoffen zu bestehen, sind jedoch derzeit noch nicht marktfähig.

Ferner sind technische Lösungen für die Herstellung von mineralisch gebundenen Strohplatten mit Wasserglas ebenfalls Gegenstand von Untersuchungen. Die Entwicklungen von Strohplatten mit Bindemitteln aus nachwachsenden Rohstoffen beschränkt sich derzeit auf die Verwendung von Kaseinklebern und Stärke- bzw. Lignin/Tanin-Bindemitteln. Eine kleb- und kunststofffreie Alternative sind im Nassverfahren hergestellte poröse Platten, mittelharte und harte Platten aus Holzfasern. Ferner werden stranggepresste Strohplatten produziert, die ebenfalls bindemittelfrei sind. Diese haben aber eine relativ geringe Wandstärke und eine sehr hohe Dichte.

Ferner sind Verpackungsformteile bekannt, die derzeit überwiegend aus biologischen nichtabbaubaren Rohstoffen hergestellt sind, wobei Polystyrol und Polyethylen zwei der am häufigsten eingesetzten Werkstoffe für diese Zwecke sind.

Als Faserrohstoffe für die Vliesentwicklung werden derzeit Flachskämmlinge bzw. Flachsfasern, die auch in der Automobilindustrie als Faserverbundwerkstoffe eingesetzt werden, sowie Strohfasern verwendet. Stroh ist als landwirtschaftliches Nebenprodukt billig und in großen Mengen verfügbar. Es bedarf jedoch einer mechanischen Aufbereitung, um die Strohfasern für den Vlieslegeprozess zu konditionieren. Flachskämmlinge sind ein Nebenprodukt der textilen Verarbeitungskette und dienen aufgrund ihrer feinen Fasern für die Verbesserung des Vliesaufbaus.

Die Druckschrift EP 1 400 328 A1 offenbart einen Hybridvliesstoff aus einem Naturfaservlies aus Strohfasern sowie einer Matrix aus einem biologisch abbaubaren Kunststoff, wobei das Natusfaservlies und die Matrix durch Temperatureinwirkung zum Hybridvliesstoff verbunden werden. Dabei kann aus dem Hybridvliesstoff ein Naturfaserformteil oder ein Wandelement durch Formpressung unter Wärmeeinwirkung geeigneter Schichten des Vliesstoffs erzeugt werden.

Druckschrift EP 1 726 418 A1 zeigt ein Verfahren zur Herstellung eines Naturfaserformteils aus Holzfasern und Polyactidfasern.

Druckschrift JP 2004 255833 A zeigt ein biologisch abbaubares Faserlaminat aus Bambusfasern und Polyactidfasern sowie ein Verfahren zur Herstellung eines derartigen Laminats.

Der Erfindung liegt daher die Aufgabe zugrunde, ein aus einem Hybridvliesstoff hergestelltes Faserverbundformteil sowie Wandelement zu erstellen.

Diese Aufgabe wird durch ein Naturfaserformteil mit den Merkmalen des Anspruchs 1, sowie ein Wandelement mit den Merkmalen des Anspruchs 3 sowie ein Verfahren zur Herstellung eines Naturfaserformteil mit den Merkmalen des Anspruchs 2 gelöst. Bevorzugte Ausgestaltungen der Erfindung sind Gegenstand der Unteransprüche.

Dabei umfasst ein Hybridvliesstoff ein Naturfaservlies aus Strohfasern und mindestens eine weitere Naturfaser, wobei das Naturfaservlies in einer Matrix aus einem biologisch abbaubaren Kunststoff angeordnet ist. Dabei werden das Naturfaservlies und die Matrix durch Temperatureinwirkung mit einander zu dem erfindungsgemäßen Hybridvliesstoff verbunden. Als Matrix wird dabei das umhüllende Material bezeichnet, welches die Naturfasern umgibt, und in denen die Fasern angeordnet sind. Vorzugsweise wird genau eine weitere Naturfaser verwendet, die entweder eine Flachsfaser oder eine Hanffaser ist.

Als Matrix für den Hybridvliesstoff kommt vorzugsweise Polyactid, kurz PLA, zur Anwendung, die in das Naturfaservlies eingebracht wird. Insbesondere kann eine Polyactidfaser verwendet werden, die in Faserform mit den Naturfasern gemischt wird.

Bei dem Hybridvliesstoff liegt der Anteil an Strohfasern zwischen 1 und 99%, der Anteil der mindestens einen weiteren Naturfaser liegt ebenfalls zwischen 1 und 99% und der Anteil der Matrix beträgt 1 bis 99%.

Ferner beträgt das Verhältnis von Strohfaser zu der mindestens einen weiteren Naturfaser 0,5 bis 2, insbesondere 0,9 bis 1,1 und weiter bevorzugt beträgt das Verhältnis der Anteile 1. Weiter bevorzugt liegt der Matrixanteil des Hybridvliesstoffes zwischen 20 und 30%. Beispielsweise führt eine Verteilung von 35% Stroh, 35% Flachsfaser und 35% Polyactidfaser zu guten Ergebnissen.

Ferner werden Strohfasern mit verminderter Wachsschicht verwendet. Dies kann beispielsweise durch Überlagerung des Strohs erzielt werden, da durch die Überlagerung ein teilweise Abbau der Wachsschicht am Halm erfolgt. Durch diesen Abbau der Wachsschicht bei überlagertem Stroh wird die Verklebung und das Vlieslegen erleichtert.

Die Aufbereitung des Strohs zu den entsprechenden Längen wird beispielsweise mittels Hammermühlen realisiert, wobei vorzugsweise die Länge der Strohfasern zwischen 0,5 und 7 cm beträgt. Durch die Aufbereitung des Strohs werden aufgeschlitzte Strohhalme mit einer Rohdichte von beispielsweise ca. 80 kg/m³ erzeugt.

Weiterhin wird ein Feuchtigkeitsgehalt der Strohfasern von bis zu 20% bevorzugt, da dies eine bessere Verarbeitung und Vlieslegung ermöglichte, da die Fasern weniger brüchig sind.

Das erfindungsgemäße Naturfaserformteil wurde durch die Verwendung von mindestens einer Lage eines im vorangegangenen beschriebenen Hybridvliesstoffes durch Formpressung unter Wärmeeinfluss erzeugt wobei kann die Oberfläche des erhaltenen Naturfaserverbundwerkstoffs eine Oberflächenbeschichtung aus einer Folie eines biologisch abbaubaren Kunststoffs aufweist, beispielsweise durch Aufbringen transparenter oder farbiger Polyactidfolien oder textile Kaschierungen.

Derartige durch Formpressung erzeugte Naturfaserverbundwerkstoffe können beispielsweise als Verpackungsmaterial oder ähnliches eingesetzt werden.

Ein erfindungsgemäßes Wandelement besteht aus zwei oder mehreren übereinander gelegten und miteinander verbundenen Wandelementschichten, wobei eine Wandelementschicht mindestens eine Lage des oben beschriebenen Hybridvliesstoffes umfasst, die unter Zuführung von Wärme verpresst sind. Vorzugsweise haben die Deckschichten des Wandelements eine höhere Dichte als der innere Teil, d.h., die inneren Schichten des Wandelements. Dadurch wird eine geeignete Wärmedämmung und akustische Dämmung für das Wandelement erreicht. Dabei besteht ein erfindungsgemäßes Wandelement aus einer oberen und unteren Deckschicht aus je einer Lage des Hybridvliesstoffes. Vorzugsweise sind zwischen den Deckschichten zwei Wandelementschichten angeordnet sind, von denen jede jeweils aus zwei Lagen des oben erläuterten Hybridvliesstoffes bestehen. Die Wandelementschichten sind miteinander durch eine Verklebung verbunden, wobei eine Verklebung beispielsweise durch den Auftrag eines Klebemittels oder durch ein Heißpressen bewirkt wird. Letzterer Vorgang führt zu einem erneuten Aufschmelzen der in der Oberfläche der Wandelementschicht angeordneten PLA-Matrix, so dass die Oberflächen mit einander verschmelzen, d.h., verkleben. Bei einem Leimauftrag kann beispielsweise ein Weißleim verwendet werden, der aufgesprüht wird.

Ein Verfahren zur Herstellung des oben beschriebenen Hybridvliesstoffes weist die folgenden Schritte auf:
- mechanische Aufbereitung der Strohfasern auf Längen bis maximal 7 cm, vorzugsweise zwischen 5 und 7 cm,
- Mischen der aufbereiteten Strohfasern mit Flachs- und/oder Hanffasern sowie den Matrixfasern in einem vorgegebenen Verhältnis,
- Erzeugung einer Wirrlage der Fasern und
- Verdichtung der Wirrlage durch Wärmeeinwirkung.

Dabei wird die mechanische Aufbereitung der Strohfasern beispielsweise durch eine Hammermühle vorgenommen.

Zur Erzeugung des erfindungsgemäßen Naturfaserformteils wird mindestens eine Lage des im vorangegangen erläuterten Hybridvliesstoffes formgepresst, wobei der Formpressung eine vorgegebene Wärmezufuhr in das Vlies erfolgen kann. Zur Erzielung einer geeigneten Oberfläche wird dabei eine Folie aus einem biologisch abbaubaren Kunststoff, beispielsweise PLA, auf der Lage des Hybridvliesstoffes aufgebracht und mit verpresst.

Bei einem Verfahren zur Herstellung des im vorangegangen beschriebenen Wandelements werden mehrere Wandelementschichten durch Verkleben flächig mit einander verbunden, wobei jede Wandelementschicht aus mindestens einer Lage des Hybridvliesstoffes hergestellt wird. Insbesondere kann das Verkleben durch Heißpressen und/oder einen Leimauftrag erfolgen.

Bevorzugt wird eine Oberflächenbehandlung des Wandelements durchgeführt, wobei eine derartige Oberflächenbehandlung das Aufbringen einer Kaschierung, eines Putzes oder eines Oberflächenfinish sein kann.

Bevorzugte Ausführungsformen der Erfindung werden nachfolgend anhand der Zeichnungen erläutert, wobei
- Fig. 1: die schematische Darstellung eines Faserverbundwerkstoffes,
- Fig. 2: ein Flussdiagramm zur Erzeugung des Hybridvliesstoffes,
- Fig. 3: eine schematische Darstellung der Formpresstechnologie zur Erzeugung des Naturfaserformteils, und
- Fig. 4: einen Querschnitt durch ein Wandelement zeigt.

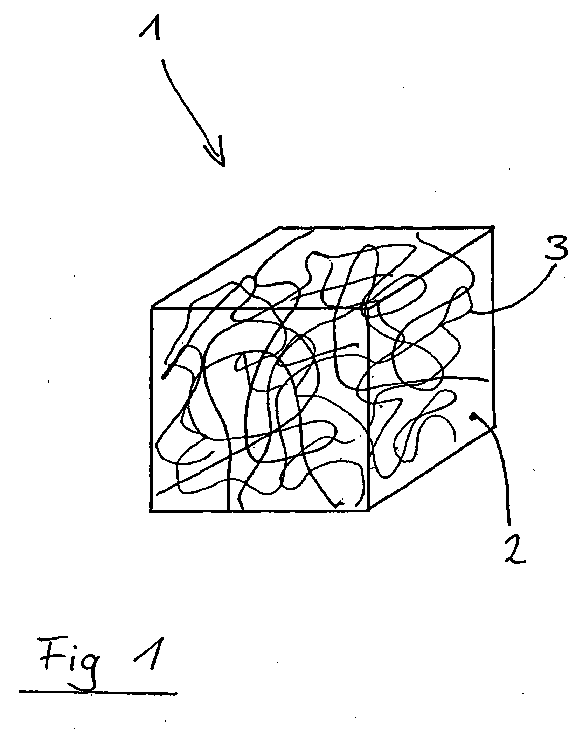

Fig. 1 zeigt in schematischer Darstellung einen Naturfaserverbundwerkstoff 1, bestehend aus in einer Matrix 2 eingelagerten Fasern 3. Für die hier verwendeten Fasern kommen Flachs-, Hanf- und Strohfasern in Betracht, wobei als Matrix ein biologisch abbaubarer Kunststoff dient, der aus Dextrose gewonnen wird. Er wird als Polyactid, kurz PLA, bezeichnet, ist wasserabweisend und durch seine biologische Abbaubarkeit kompostierbar. Die Verarbeitung des PLA erfolgt wie bei handelsüblichen Massenkunststoffen, beispielsweise Polypropylen oder Polyethylen. Verwendet werden in der bevorzugten Ausführungsform Polyactidfasern, kurz PLA-Fasern, wobei das Polyactid mittels Milchsäure hergestellt wird, welche wiederum aus Dextrose durch Fermentation gewonnen wird.

Der Zweck der Matrix 2 ist es, die Fasern 3 zu umhüllen, so dass die Fasern fixiert werden, der Kraftschluss zwischen den einzelnen Fasern gewährleistet wird, ein Ausknicken unter Druckbelastung verhindert wird und die Fasern vor Umgebungseinflüssen, wie Feuchtigkeit, geschützt werden.

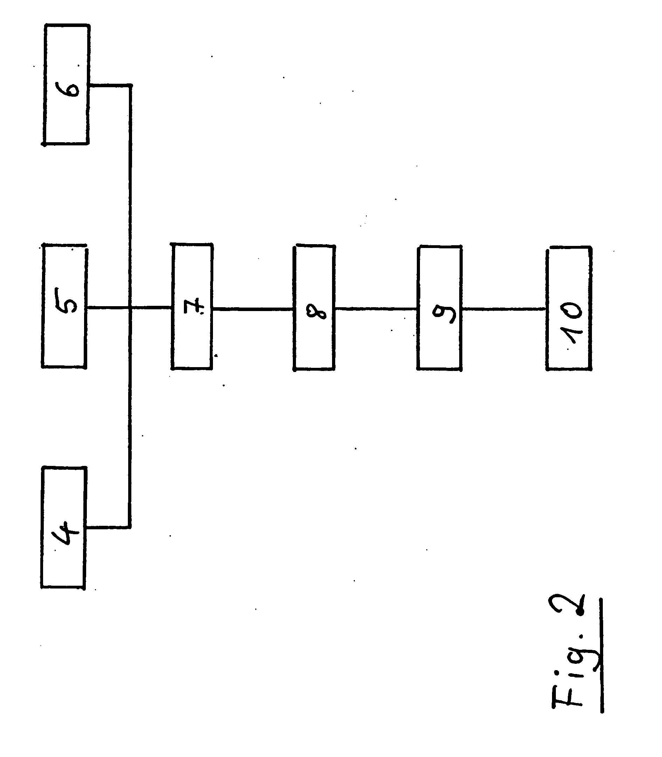

Ein solcher Naturfaserverbundwerkstoff kann beispielsweise ein Hybridvliesstoffes sein, der wie gemäß dem Flussdiagramm der Fig. 2 erzeugt wird. Es werden Strohfasern 4 sowie Flachsfasern 5 und Polyactid-Fasern 6 in einem Mischvorgang 7 mit einander gemischt und die Mischung auf einem Förderband 8 abgelegt. In einer nachfolgenden Phase der Temperatureinwirkung und Konsolidierung 9 wird die Mischung zu einem Hybridvliesstoff 10 verarbeitet, wie dies im folgenden genauer erläutert wird.

Als Faserrohstoffe für die Schaffung eines oben erläuterten Hybridvliesstoffes werden in einer bevorzugten Ausführungsform sowohl Flachskämmlinge bzw. Flachsfasern als auch Strohfasern herangezogen. Stroh ist als landwirtschaftliches Nebenprodukt billig und in großen Mengen verfügbar. Es bedarf jedoch einer mechanischen Aufbereitung, um die Strohfasern für den Vlieslegeprozess zu konditionieren. Flachskämmlinge sind ein Nebenprodukt der Textilverarbeitungskette und dienen aufgrund ihrer feinen Fasern für die Verbesserung des Vliesaufbaus. Verwendet wird vorzugsweise Weizenstroh oder Gerstenstroh mit verminderter Wachsschicht, die durch eine Überlagerung des Strohs bewirkt werden kann. Durch die Überlagerung erfolgt ein teilweiser Abbau der Wachsschicht am Halm, so dass die Verklebung und das Vlieslegen der Strohfasern erleichtert wird. Die Aufbereitung des Strohs zu entsprechenden Längen erfolgt mittels Hammermühlen, wobei für den Vlieslegeprozess Strohfasern einer Länge zwischen 0,5 und 7 cm optimal sind.

Ferner verbessert ein Feuchtegehalt des Strohs von rund 20% den Vlieslegeprozess weiter, da aufgrund des Feuchtegehaltes die Fasern weniger brüchig sind.

Die durchschnittliche Länge der Flachsfasern betrug in etwa 20 mm, wobei auch Längen von bis zu 200 mm eingesetzt wurden. Es wurden ausschließlich Produkte verwendet, die für die Herstellung von Flachsgarnen oder -zwirnen über keine ausreichende Qualität verfügten.

Ferner können Hanffasern oder ein Gemisch aus Hanf- und Flachsfasern verwendet werden, wobei die Hanffasern jedoch dicke Fasern aufweisen, was bei der Vlieslegung gegenüber Flachsfasern von Nachteil ist.

Das zur Erzeugung des Vlieses verwendete Matrix aus Polyactid ist ein Kunststoff, der aus nachwachsenden Rohstoffen hergestellt wird, wobei seine steigende Verfügbarkeit aufgrund zunehmender industrieller Produktion ihn für biologisch abbaubare Verbundwerkstoffe interessant macht. Dabei erfolgt die Verarbeitung wie bei üblichen Massenkunststoffen. Die Schmelztemperatur von PLA liegt unter der Zersetzungstemperatur von Naturfasern, wodurch biologisch abbaubaren Naturfaserverbundwerkstoffen hergestellt werden können. Chemisch betrachtet ist PLA ein Polyester und basiert auf Milchsäure, welche in Pflanzen und Tieren vorgefunden wird und von verschiedenen Bakterienarten produzierten werden kann. Als Ausgangsrohstoffen dienen stärke- oder zuckerhaltige Pflanzen und organische Abfälle. Unterschieden wird zwischen der L-Milchsäure, welche in der Natur am häufigsten vorkommt, und der D-Milchsäure. PLA ist aufgrund seiner Eigenschaften zwischen Polyethylenterephthalat (PET) und Polypropylen (PP) einzuordnen. Es ist ein Polyester mit einem sehr breiten Anwendungsgebiet, und aus ihm können transparente Folien, Fasern oder spritzgegossene Werkstücke oder Rohlinge hergestellt werden. PLA mit hohen Molekulargewicht hemmt Bakterien und Pilzwachstum und wird unter hoher Luftfeuchtigkeit und hoher Temperatur abgebaut. Solche Bedingungen finden sich beispielsweise in Kompostieranlagen. Dabei erfolgt der Abbau in zwei Schritten, nämlich das hochmolekulare PLA wird durch Hydrolyse zu niedermolekularem PLA abgebaut, wonach die Fragmente von Bakterien zersetzt werden.

Die Strohfasern 4, Flachsfasern 5 und Matrix 6, wobei die Matrix in Faserform vorliegt, werden gemischt und mittels des aerodynamischen Prinzips wird ein Vlies mit Wirrlage der eingesetzten Fasern 4, 5, 6 erzeugt. Dabei liegen die Fasern in einem festgelegten Mischverhältnis in dem so erzeugten Fasergemisch vor. Das Fasergemisch wird auf dem Förderband 8 abgelegt und unter Temperatureinwirkung und Konsolidierung wird der Hybridvliesstoff 10 gebildet. Die Temperatureinwirkung und Konsolidierung kann beispielsweise mittels einer geheizten kontinuierlichen Doppelbandpresse durchgeführt werden, wobei dieses Verfahren als Thermobonding bezeichnet wird. Dabei wird der anfangs sehr lockere Faserflor mittels Siebbänder komprimiert und anschließend von der Unter- als auch der Oberseite mittels Luftdüsen auf die gewählte Temperatur gebracht, wobei die Kompression des Faserflors variabel ist. In einer bevorzugten Ausführungsform wird das Verhältnis von Strohspänen zu Flachsfasern im Bereich von0,5 bis 2, bevorzugt 0,9 bis 1,1 und insbesondere 1 festgelegt, wobei sich der PLA-Anteil zwischen 20 und 30% bewegt.

Die erzeugten Faservliese weisen ein Flächengewicht von 500 bis 8000 g/m² auf, wobei durch das Thermobonding Verdichtungen von 70 bis 200 kg/m³ erreicht werden.

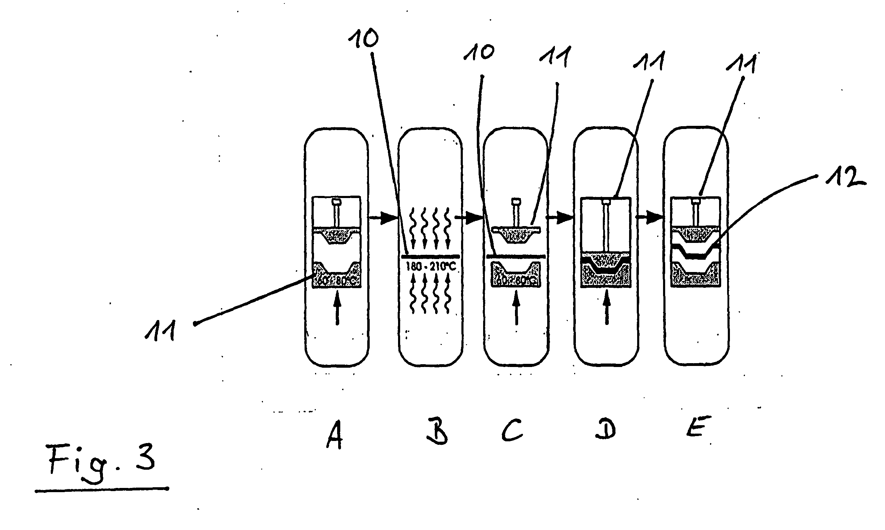

Fig. 3 zeigt in schematischer Darstellung das Verfahren zur Herstellung des Naturfaserformteils aus dem Hybridvliesstoff mittels Formpresstechnologie. In Schritt A wird das Presswerkzeug 11 auf ca. 60 bis 80°C temperiert. Schritt B dient der schematischen Darstellung der Erwärmung der Hybridvliesmatte 10 auf eine vorgegeben Temperatur, beispielsweise von ca. 180 bis 210°C, wobei dieser Schritt zur Erweichung der Matrix dient. In Schritt C wird das erwärmte Presswerkzeug 11 der Formpresse mit dem Hybridvliesstoff 10 beschickt und in Schritt D erfolgt die Pressung der Hybridvliesmatte 10 durch das Presswerkzeug 11, in welchem das Material zerstörungsfrei verformt wird. Die Presszeiten sind sehr kurz, da der Kunststoff an den wesentlich kühleren Presswerkzeugen rasch auskühlt und erstarrt. Im Schritt E schließlich wird das fertige Naturfaserformteil aus dem Presswerkzeug 11 der Formpresse ausgeformt.

Mittels des erläuterten Formpressverfahrens können verschiedenartigste Formteile erzeugt werden, beispielsweise Verpackungsformteile usw. Bei der Verwendung geeigneter Vliese, beispielsweise mit einem Flächengewicht von 500 g/m², können kurze Presszeiten erreicht werden, wobei je nach Anzahl der verwendeten Vlieslagen unterschiedlich hohe Festigkeiten erzielbar sind. Um Oberflächenrauhigkeiten auszugleichen, können entweder Kaschierungen aufgebracht werden oder es kann auf der Außenseite eine Folie aus einem abbaubaren Kunststoff, beispielsweise PLA, aufgebracht werden, um die hydrophilen Eigenschaften des Naturfasercompounds zu unterbinden. Die PLA-Folie kann gleichzeitig mit der erwärmten Hybridnaturfasermatte in die Formpresse der Fig. 3 eingebracht werden, so dass auf der Presse ein oberflächenveredelter Compound ausgeformt wird.

Weitere Einsatzmöglichkeiten derartiger Naturfasercompounds sind Auto-Innenverkleidungen, Kofferschalen, Verpackungsformteile, Schachteln, Falttaschen etc.

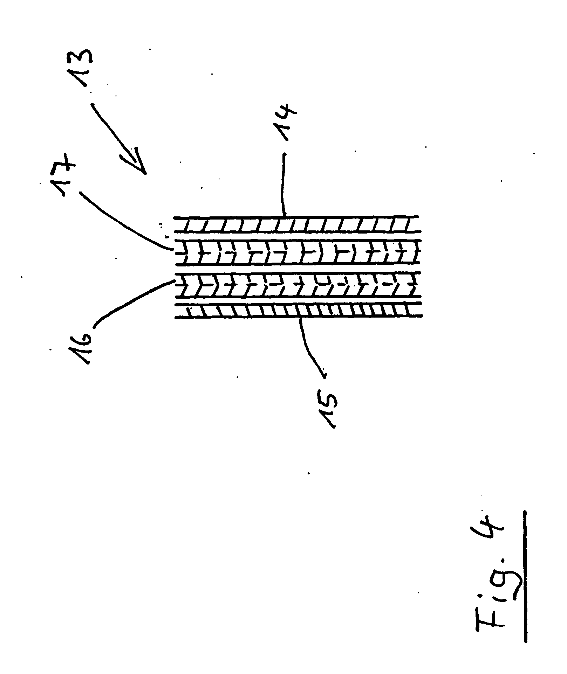

Fig. 4 zeigt einen Querschnitt durch ein Wandelement 13, bestehend aus mehreren Schichten 14, 15, 16, 17 aus Naturfaserverbundwerkstoff. Dabei weist das Wandelement zwei Oberflächenschichten 14, 15 auf, die im Beispiel aus einer Lage eines Hybridvliesstoffs geformt sind, während die inneren Schichten 16, 17 jeweils aus zwei Lage des oben beschriebenen Hybridvliesstoffs gepresst bzw. geformt sind. Im Beispiel sind die Oberflächenschichten 14, 15 höher verdichtet als die inneren Schichten 16, 17, um einerseits für die nötige statische Belastung des Wandelements 13 zu sorgen, und andererseits die notwendige Schalldämmung zu erzielen.

Derartige Wandelemente können als nicht-tragende Zwischenwände bzw. nicht-tragende Innenwände innerhalb einer gleichen Einheit, wie beispielsweise Büros oder Zimmer innerhalb einer Wohnung, verwendet werden. Dabei sind Zwischenwände aus dem Naturfaserverbundwerkstoff, d.h. Fasercompounds, im Vergleich zu konventionellen Wandstrukturen günstiger, insbesondere weil sie schneller und einfacher zu montieren sind. Für derartige Wandelemente, die sogenannte "Strohwand", gibt es im wesentlichen zwei Einsatzmöglichkeiten, nämlich als mobile Trennwand in Büros oder als stationäre Zwischenwand, die keine Fugen aufweist und bei der vor Ort nur noch die Oberflächenbehandlung durchgeführt werden muss, um eine fertige Wand zu erhalten.

Für eine eingebaute Bürowand muss eine Schalldämpfung von mindestens 37 dB vorliegen, wodurch der in Fig. 4 dargestellte mehrschichtige Wandaufbau die notwendige Schalldämpfung liefert.

Um eine glatte Oberfläche zu erzielen, kann Stärke oder Harz aufgebracht bzw. eine textile Oberfläche, wie beispielsweise Baumwolle, aufgeklebt werden.

Wie in Fig. 4 dargestellt, werden für einige Schichten mehrere Vlieslagen übereinander gelegt und anschließend verpresst. Durch den Bindemittelanteil, der durch Hitze wieder aktiviert wird, werden die einzelnen Vlieslagen miteinander verbunden und dadurch ein optimaler Wandaufbau erreicht.

Die Oberfläche des Wandelements müssen hart und widerstandsfähig ausgeführt werden, während der mittlere Teil eine geringere Dichte aufweist. Dadurch wird einerseits eine verbesserte Schalldämmung generiert und andererseits wurde eine spezifische Dichte pro Wandelement von rund 200 kg/m³ erzielt, wodurch derartige mobile Zwischenwände handhabbar werden.

Die Verbindung der Schichten des Wandelements können einerseits ohne Zufuhr von zusätzlichem Kleber erzielt werden, da durch Verpressen die einzelnen Schichten unter Wärmezufuhr die im Beispiel verwendete Thermoplastfaser wieder geschmolzen wird, so dass sich die Oberflächen der einzelnen Schichten nach dem Auskühlen wieder miteinander verbinden. Andererseits ist es auch möglich, die einzelnen Schichten im Pressverfahren zu erzeugen; und diese anschließend mit einem Naturkleber, wie beispielsweise das Aufsprühen von Weißleim, zum Wandelement miteinander zu verbinden.

Die Oberflächen der Wandelemente können je nach Wünschen des Konsumenten unbehandelt, verputzt oder kaschiert hergestellt werden. Eine Verputzung oder ein Aufbringen von Tapete kann vor Ort bei der eingebauten Zwischenwand ebenso erfolgen.

### BEZUGSZEICHENLISTE

- 1: Naturfaserverbundwerkstoff
- 2: Matrix
- 3: Naturfasern
- 4: Strohfasern
- 5: Flachsfasern
- 6: Polyactid
- 7: Mischvorgang
- 8: Ablegen auf dem Förderband
- 9: Temperatureinwirkung und Konsolidierung
- 10: Hybridvliesstoff
- 11: Presswerkzeug
- 12: Naturfaserformteil
- 13-: Wandelement
- 14: Außenschicht
- 15: Außenschicht
- 16: Innenschicht
- 17: Innenschicht

- A: Vorwärmung
- B: Erwärmung
- C: Beschickung
- D: Druck
- E: Entformen

## Patentansprüche

1. Naturfaserformteil unter Verwendung von mindestens einer Lage eines Hybridvliesstoffs bestehend aus einem Naturfaservlies aus Strohfasem und mindestens einer weiteren Naturfaser sowie einer Matrix aus einem biologisch abbaubaren Kunststoff, wobei das Naturfaservlies und die Matrix durch Temperatureinwirkung zum Hybridvliesstoff verbunden werden, wobei das Naturfaserformteil durch Formpressung unter Wärmeeinfluss der mindestens einen Lage des Hybridvliesstoffs erzeugt wird, und wobei die Oberfläche des Naturfaserverbundwerkstoffs eine Oberflächenbeschichtung aus einer Folie aus biologisch abbaubarem Kunststoff aufweist.

2. Verfahren zur Herstellung eines Naturfaserformteils nach Anspruch 1, **dadurch gekennzeichnet, dass** mindestens eine Lage des Hybridvliesstoffes formgepresst wird, wobei eine Folie eines biologisch abbaubaren Kunststoffs auf der mindestens einen Lage des Hybridvliesstoffs aufgebracht und mit formgepresst wird.

3. Wandelement bestehend aus zwei oder mehreren übereinander gelegten Schichten, wobei eine Schicht aus mindestens einer Lage eines Hybridvliesstoffs bestehend aus einem Naturfaservlies aus Strohfasem und mindestens einer weiteren Naturfaser sowie einer Matrix aus einem biologisch abbaubaren Kunststoff, wobei das Naturfaservlies und die Matrix durch Temperatureinwirkung zum Hybridvliesstoff verbunden werden, die unter Zuführung von Wärme verpresst sind, besteht, wobei die Deckschichten des Wandelements jeweils eine Lage Hybridvliesstoff umfassen.

4. Wandelement nach Anspruch 3, **dadurch gekennzeichnet, dass** die Deckschichten des Wandelements eine höhere Dichte als der innere Teil des Wandelements aufweisen.

5. Wandelement nach Anspruch 3 oder 4, **dadurch gekennzeichnet, dass** die Oberflächen des Wandelements hart ausgeführt sind.

6. Wandelement nach einem der Ansprüche 3 bis 5, **dadurch gekennzeichnet, dass** das Wandelement eine oder mehrere Innenschichten umfasst, wobei jede Innenschicht aus zwei Lagen Hybridvliesstoff gefertigt ist.

7. Wandelement nach einem der Ansprüche 3 bis 6, **dadurch gekennzeichnet, dass** die Schichten des Wandelements miteinander verklebt sind.

8. Wandelement nach Anspruch 7, **dadurch gekennzeichnet, dass** die Verklebung durch Leimauftrag und/oder Heißpressen erfolgt.

## Claims

1. Natural fibre moulding using at least one sublayer of a hybrid non-woven material composed of a natural fibre non-woven made of straw fibres and of at least one further natural fibre and also of a matrix made of a biodegradable plastic, where the natural fibre non-woven and the matrix are bonded via the effect of temperature to give the hybrid non-woven material, where the natural fibre moulding is produced via pressing of the at least one sublayer of the hybrid non-woven material in a mould with the effect of heat, and where the surface of the natural fibre composite material has a surface coating made of a foil made of biodegradable plastic.

2. Process for producing a natural fibre moulding according to Claim 1, **characterized in that** at least one sublayer of the hybrid non-woven material is subjected to pressing in a mould, where a foil of a biodegradable plastic is applied on the at least one sublayer of the hybrid non-woven material and is concomitantly subjected to pressing in a mould.

3. Wall element composed of two or more mutually superposed layers, where a layer made of at least one sublayer of a hybrid non-woven material composed of a natural fibre non-woven made of straw fibres and of at least one further natural fibre, and also of a matrix made of a biodegradable plastic, where the natural fibre non-woven and the matrix are bonded to the hybrid non-woven material via the effect of temperature, where these have been laminated with introduction of heat, where the outer layers of the wall element respectively encompass a sublayer of hybrid non-woven material.

4. Wall element according to Claim 3, **characterized in that** the density of the outer layers of the wall element is higher than that of the inner portion of the wall element.

5. Wall element according to Claim 3 or 4, **characterized in that** the surfaces of the wall element are hard.

6. Wall element according to any of Claims 3 to 5, **characterized in that** the wall element encompasses one or more internal layers, where each internal layer has been manufactured from two sublayers of hybrid non-woven material.

7. Wall element according to any of Claims 3 to 6, **characterized in that** the layers of the wall element have been adhesive-bonded to one another.

8. Wall element according to Claim 7, **characterized in that** the adhesive bonding takes place via glue application and/or hot pressing.

## Revendications

1. Pièce moulée en fibres naturelles utilisant au moins une épaisseur d'un non-tissé hybride constitué d'un non-tissé de fibres naturelles à base de fibres de paille et d'au moins une fibre naturelle supplémentaire, ainsi que d'une matrice en un plastique biodégradable, le non-tissé de fibres naturelles et la matrice étant reliés par l'effet de la température pour former le non-tissé hybride, la pièce moulée en fibres naturelles étant générée par formage à la presse sous l'effet de la chaleur de la ou des épaisseurs du non-tissé hybride, et la surface du matériau composite en fibres naturelles comportant un revêtement de surface constitué d'un film en plastique biodégradable.

2. Procédé de fabrication d'une pièce moulée en fibres naturelles selon la revendication 1, **caractérisé en ce qu'**au moins une épaisseur du non-tissé hybride est formée à la presse, un film d'un plastique biodégradable étant appliqué sur la ou les épaisseurs du non-tissé hybride et formé à la presse avec celles-ci.

3. Élément de paroi constitué de deux couches ou plus placées les unes sur les autres, dans lequel une couche d'au moins une épaisseur d'un non-tissé hybride, constitué d'un non-tissé de fibres naturelles à base de fibres de paille et d'au moins une fibre naturelle supplémentaire, ainsi que d'une matrice en un plastique biodégradable, le non-tissé de fibres naturelles et la matrice étant reliés par l'effet de la température pour former le non-tissé hybride, lesdites couches étant comprimées avec apport de chaleur, les couches supérieures de l'élément de paroi comprenant chacune une épaisseur de non-tissé hybride.

4. Élément de paroi selon la revendication 3, **caractérisé en ce que** les couches supérieures de l'élément de paroi présentent une densité supérieure à la partie intérieure de l'élément de paroi.

5. Élément de paroi selon la revendication 3 ou 4, **caractérisé en ce que** les surfaces de l'élément de paroi sont conçues sous forme dure.

6. Élément de paroi selon l'une quelconque des revendications 3 à 5, **caractérisé en ce que** l'élément de paroi comprend une ou plusieurs couches intérieures, chaque couche intérieure étant fabriquée à partir de deux épaisseurs de non-tissé hybride.

7. Élément de paroi selon l'une quelconque des revendications 3 à 6, **caractérisé en ce que** les couches de l'élément de paroi sont collées les unes avec les autres.

8. Élément de paroi selon la revendication 7, **caractérisé en ce que** le collage a lieu par application de colle et/ou compression à chaud.
